# EUROPEAN PATENT APPLICATION

(11) **EP 4 794 226 A1**
(43) Date of publication of application: **19.08.2026**
(21) Application number: 25158392.8
(22) Date of filing: 17.02.2025
(51) Int. Cl.: H04B 17/10, H04W 52/08

(54) **METHOD OF OPERATING A BASE STATION IN A TELECOMMUNICATIONS NETWORK, COMPUTER PROGRAM AND COMPUTER-READABLE MEDIUM**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method of operating a base station in a telecommunications network, the base station configured to communicate wirelessly with a device comprising an antenna. The method comprises obtaining, at the base station, an output transmission power parameter of the antenna and/or a transmission power parameter derived based on the output transmission power parameter. The method further comprises operating the base station according to the obtained output transmission power parameter and/or obtained derived transmission power parameter

## Description

### FIELD

The disclosure relates generally to operating a base station in a telecommunications network.

### BACKGROUND

In wireless communication networks in which devices with antennas communicate with a network (specifically, a base station of the network) via the antenna, efficient communications and overall network performance can depend on power monitoring and power control within the network. For example, the transmission power of the device antenna may directly impact uplink (end device to network) coverage, interference management, as well as the implementation of power control methods by the network or device. An example of such a network is a 3GPP cellular networks.

For user equipment, UEs, in a cellular network, which may operate within strict power constraints, 3GPP standards (for example, LTE, 5G NR, and so on) may define mechanisms to regulate UE transmission power dynamically. This may allow signals to remain sufficiently strong for reliable connectivity, whilst also minimising excessive power that could cause interference.

Effective uplink power control may be important for maintaining a stable network connection, particularly in cell-edge scenarios in cellular networks, where signal attenuation may be higher. One example of power control that may be used is open-loop power control (OLPC), which can help set an initial transmission power based on path loss estimates. Another example of power control is closed-loop power control (CLPC), which continuously adjusts power levels based on feedback from the network.

Power regulation can enable UEs or other devices to transmit with just enough power to maintain link quality, which can optimise both battery life and spectral efficiency. Furthermore, precise device power management can help mitigate uplink interference, preventing high-power devices from degrading the signal quality of other users or, in cellular networks, neighbouring cells. As cellular networks evolve towards massive multi-input multi-output (MIMO) and millimeter-wave (mmWave) technologies, accurate power control may become even more critical to ensuring efficient spectrum utilization and enhanced uplink reliability.

It is desirable to provide methods capable of appropriately operating a base station in view of these mechanisms.

### SUMMARY

A base station in a telecommunications network is configured to communicate wirelessly with a device comprising an antenna via the device antenna. The device may be a UE or another cellular network device. The cellular network may be a 3G, 4G, 5G, 6G network, and so on. Other network devices and other types of network may be used.

Power is input to the antenna to allow the device to send signals to the network using the antenna. This input power may be reported to the base station. However, the power output by the antenna to send the signal may differ from the power input to the antenna, due to various factors including, for example, antenna losses, combiner losses, RF component variations and so on. Therefore, the base station may make decisions or take actions based on inaccurate information.

Accordingly, the output power of the antenna and/or another power parameter value derived from the output power of the antenna is ascertained by or at the base station. For example, the base station itself may ascertain (for example, determine, measure, calculate, estimate or otherwise identify) the output power and/or another power parameter value. In other examples, the base station may ascertain the output power and/or another power parameter value by receiving the information from another entity (for example, the device comprising the antenna).

In either case, the information may be ascertained based on previously obtained information. For example, an antenna of the same type as that in the device communicating with the base station may be tested under real-life conditions beforehand (and optionally, under various conditions, including for example, transmission at different frequencies, in different locations, with different input power values, and so on).

One or more results of these tests may be stored by the base station or the device, which the base station or device can then use to ascertain the output power of the antenna and/or the another power parameter (optionally prior to an attempt by the device to transmit a signal to the base station). For instance, a difference between an input and output power for the antenna may be stored by the base station or device, from which the base station or device can determine the output power based on a known input power. In other words, the another power parameter may be a difference between the input and output power.

In other examples, the other power parameter may indicate an amount of power above the output power that the device is still capable of providing (for example, based on the limitations of the device and/or network regulations to limit transmission power).

Once the output power and/or another power parameter has been obtained, the base station is operated according to the obtained power parameter(s). This operation may include the implementation of power management methods, interference management methods, MIMO or massive MIMO scheduling or other adjustments, and so on.

Using an output power of the device antenna to implement base station operations may mean that the power identified at the base station can more accurately reflect how the device antenna is being used. This can allow the network to more effectively implement power control mechanisms and other mechanisms for improving network performance (for instance, interference detection and management). Thus, by obtaining an output power of an antenna to the network, network power management and performance can be improved in a straightforward manner.

A method of operating a base station in a telecommunications network, the base station configured to communicate wirelessly with a device comprising an antenna, the method comprising steps of:
obtaining, at the base station, an output transmission power parameter of the antenna and/or a transmission power parameter derived based on the output transmission power parameter; and
operating the base station according to the obtained output transmission power parameter or derived transmission power parameter.

Thus, the network can be informed of the output transmission power parameter of the antenna, or another power parameter related to the output transmission power parameter. This can improve network performance by allowing the network and/or base station to implement more effective control and management mechanisms, through providing more accurate antenna performance information.

Optionally, obtaining the output transmission power parameter may comprise determining the output transmission power parameter based on a measurement. Similarly, obtaining the derived power parameter may comprise determining or deriving the derived power parameter based on a measurement. The measurement may be a measurement previously performed (for example, by an external device, software or the device) and stored by the device and/or the base station. Determining the output transmission power parameter based on a measurement may provide a more accurate determination of the output transmission power parameter. The step of determining may be performed by the base station or the device.

In some implementations, obtaining the output transmission power parameter may also or instead comprise estimating the output transmission power parameter. Similarly, obtaining the derived power parameter may comprise estimating the derived power parameter. The estimation may also be performed based on a measurement. Again, the measurement may be a measurement previously performed and stored by the base station and/or device. The step of estimating may be performed by the base station or the device.

In some implementations, obtaining the output transmission power parameter may also or instead comprise calculating the output transmission power parameter. Similarly, obtaining the derived power parameter may comprise calculating the derived power parameter. The calculation may also be performed based on a measurement. Again, the measurement may be a measurement previously performed and stored by the base station and/or device. The step of calculating may be performed by the base station or the device.

It will be appreciated that there may be some overlap in the steps of determining, calculating and estimating the output transmission power parameter and/or the derived power parameter.

Optionally, the measurement may be performed by the device. In other words, the method may further comprise a step of performing, by the device, a measurement. The measurement may be a measurement of the output transmission power parameter, or may be another measurement indicative of the output transmission power parameter (for example, a standing wave ratio). In other implementations, the measurement may be performed by an external device. The external device may be a device of the same type, a device having the same type of antenna, or a measurement device testing such devices. The measurement may be stored by the external device, the device and/or the base station.

In some implementations, the output transmission power parameter and/or derived transmission power parameter may be obtained based on one or more of: a type of antenna, a type of device, an expected radio frequency, RF, path of transmissions between the device and the network, an RF transmission frequency, and a conducted power parameter. Such factors may impact the output transmission power parameter and may allow an accurate output transmission power parameter to be identified, particularly if the output transmission power parameter is identified based on more than one of these factors.

In some examples, the obtained derived transmission power parameter may comprise a surplus or excess transmission power parameter for the antenna. The surplus transmission power parameter may be an available surplus transmission power parameter. For example, the device or antenna may be capable of transmitting with a greater output transmission power parameter, if authorised. The available surplus transmission power parameter may be identified as a power headroom, for instance.

It will be appreciated that, where the device or antenna is transmitting or expected to transmit more than an allowed or possible power, the excess transmission power parameter may be an amount of power greater than the amount that the device is authorised or capable of transmitting. In other words, the excess transmission power parameter may indicate the amount in excess of an allowed or possible value that the device is attempting to transmit.

In some examples, the method may further comprise storing, in a database, an indication of the output transmission power parameter. The database may be a database of the base station (that is, the base station may comprise the database). In other examples, the base station may be in communication with the database (that is, there may be an interface between the base station and the database).

Optionally, the indication may comprise a value of a difference between the obtained output transmission power parameter and a conducted power parameter. This may mean that the indication corresponds to the derived transmission power parameter (which may also be a difference between an output transmission power parameter and a conducted power parameter). In any case, storing the value of the difference may reduce the amount of data to be stored by the database whilst allowing the output transmission power parameter to be obtained in a straightforward manner.

In some implementations, the method may further comprise receiving a conducted or input power parameter from the device. The base station may then obtain the output transmission power parameter and/or the derived transmission power parameter based on the received conducted power parameter. For example, the base station may store or otherwise be able to obtain the (expected) difference between the input power parameter and output transmission power parameter of the device. Thus, when the base station receives the conducted power parameter from the device, the base station can obtain the output transmission power parameter and/or the derived parameter based on the information available to the base station.

In other implementations, the base station may receive the conducted power parameter from the database. The base station may receive this information in order to obtain the output transmission power parameter. For instance, the base station can calculate or estimate the output transmission power parameter based on the conducted power parameter and a relationship between the conducted power parameter and the output transmission power parameter determined through testing.

In some examples, the method may further comprise receiving, from the device, a further output transmission power parameter of the antenna and operating the base station according to the further output transmission power parameter. Similarly, the method may additionally or alternatively further comprise receiving, from the device a further transmission power parameter derived based on the output transmission power parameter operating the base station according to the further derived transmission power parameter.

For example, the obtained output transmission power parameter may be stored at the base station and/or a database with the base station is in communication with. The base station may then receive a further output transmission power parameter from the device. It may be assumed that the parameter received from the device is more up-to-date and therefore more accurate. The base station may accordingly operate according to the further parameter. The further output transmission power parameter may be specifically flagged as an output transmission power parameter or parameter derived from the output transmission power parameter (that is, to distinguish it from a conducted or input power that may be reported by the device). For example, the communication may label such parameters as "UL" - for example, PH_UL for a power headroom derived from the output transmission power parameter.

In other examples, the obtained output transmission power parameter may be received from the device as well as the further output transmission power parameter. The further output transmission power parameter may still be a more up-to-date value and therefore assumed to be more accurate. The base station may accordingly operate according to the further parameter.

In further implementations, operating the base station may comprise sending, to the device, a communication indicating to adjust a transmission power parameter of the device. This may allow the base station to implement power control mechanisms that can be more accurately applied, since these are based on the output transmission power parameter, which more accurately reflects the antenna use.

For example, the communication may indicate to adjust an input transmission power parameter of the device. This can enable a device capable of transmitting with greater power to do so. In other examples, devices understood to be causing (or predicted to cause) high interference can be instructed to reduce their transmission power to reduce the chance of interference.

In other examples, the communication may indicate to adjust the output transmission power parameter of the antenna. The base station may determine that the output transmission power parameter received from the device is or may be inaccurate (for example, based on one or more values available to the base station). The base station may thus indicate to the device that it should update its output transmission power parameter value.

In some implementations, operating the base station may comprise performing interference management based on the output transmission power parameter. As well as sending the communication indicating to adjust a transmission power parameter of the device, this may comprise scheduling communications to one or more devices comprising antennas (for example, UEs), implementing algorithms for interference management (for example, in MIMO and massive MIMO, precoding, decoding, scheduling and reference signal algorithms), and so on. Other interference management techniques are possible.

Preferably, the device may be a user equipment. Other devices including antennas may be used, including but not limited to a satellite navigation system, a WiFi router, a machine-to-machine device, and so on.

Optionally, the output transmission power parameter may comprise a total radiated power (TRP). A total radiated power can measure or indicate radiation of an antenna in a live system. As a result, it is not merely a function of the antenna, but also the transmitter and the connection between the antenna and the transmitter.

The methods described above may be implemented as a computer program comprising instructions to operate a computer or computer system. The computer program may be stored on a computer-readable medium, which may be non-transitory.

The computer system may include a processor, such as a central processing unit (CPU). The processor may execute logic in the form of a software program. The computer system may include a memory including volatile and non-volatile storage medium. The different parts of the system may be connected using a network (e.g. wireless networks and wired networks). The computer system may include one or more interfaces. The computer system may contain a suitable operating system such as UNIX (RTM) (including Linux (RTM)), Windows (RTM), for example.

It should be noted that any feature described herein may be used with any particular aspect or embodiment of the invention. Moreover, the combination of any specific apparatus, structural or method features is also provided, even if that combination is not explicitly disclosed.

The invention will now be described with reference to the attached drawings depicting different embodiments thereof, the drawings being provided purely by way of example and not limitation.

### BRIEF DESCRIPTION OF DRAWINGS

The invention may be put into practice in a number of ways, and preferred embodiments will now be described by way of example only and with reference to the accompanying drawings, in which:
Figure 1 illustrates a flow chart of a method of operating a base station in a telecommunications network according to an embodiment of the disclosure; and
Figure 2 shows a schematic message flow for operating a base station in a telecommunications network according to an embodiment of the disclosure.

It should be noted that the Figures are illustrated in schematic form for simplicity and are not necessarily drawn to scale. Like features are provided with the same (or similar) reference numerals.

### DESCRIPTION OF PREFERRED EMBODIMENTS

Conducted power is an RF power that is supplied to an antenna of a device, as measured at an RF connector. The conducted power value may be reported to a network by a device including an antenna configured to communicate wirelessly with the network. For example, in 3GPP cellular networks, a UE can report the conducted power as an uplink power level to a base station. This can allow the network to make decisions or otherwise make changes based on the conducted power value. In other words, the base station may be operated based on the conducted power reported by the device. For example, as discussed above, power control and interference management may play an important role in providing efficient communication between devices with antennas and a network.

The present disclosure is based on the realisation that the conducted power does not fully reflect the actual over-the-air (OTA) transmission power of the device and/or antenna. In particular, the reported uplink power is typically measured before degradations due to, for example, antenna losses, combiner losses and RF component variations, occur, meaning that the actual transmitted power at the antenna port can be several decibels lower than the power reported by the device.

Historically, this impact of this difference may have been negligible. For example, in 3G networks, the difference between a conducted power and an output transmission power was minimal and so did not greatly impact actions taken by the network. However, it has been recognised that as networks continue to grow and new implementations are introduced, the impact of this difference will increase. In particular, with each new generation, the gap between the conducted (input) power and the output power is increasing. This is at least in part because a greater range of frequencies are being covered by the same antenna, which requires a greater number of RF combiners.

Furthermore, the discrepancy can vary across device vendors and device models. This can lead to inconsistent power transmission across the network, but also can make it more difficult to implement a manner of taking the discrepancy into account, since it can depend on various factors. As such, as discussed above, the network and/or base station may misinterpret uplink power measurements, which can impact several implementations at the network and/or base station, such as power control mechanisms, interference detection and MIMO and/or massive MIMO performance, for example.

The issue therefore is how the network can find out an actual OTA uplink power level to be able to improve network efficiency, interference management and uplink reliability.

The present disclosure relates to obtaining an output transmission power parameter of a device antenna at a network - that is, a parameter which represents a transmission power parameter output by the antenna and so takes into account the actual implementation of the antenna. Implementation factors that may impact an output transmission power parameter of an antenna may include antenna losses, combiner losses, and RF component variations, among other factors. Operating a base station according to a conducted power means that such real-world factors are not taken into account. In other words, using a conducted power results in considering transmission power in networks only considered in ideal and/or non-realistic scenarios. This can impact the implementation of various power-related monitoring and managing methods and systems, including power control or interference detection techniques.

For example, in CLPC, where a base station (or another network node) continuously adjusts the transmission power of a device (for example, a UE) using Transmit Power Control (TPC) commands, inaccurate uplink power readings may cause suboptimal adjustments. This may lead to oscillations in power levels and degraded uplink throughput. Furthermore, if the actual transmitted power over the air is lower than expected due to implementation losses, the device may not generate sufficient uplink signal strength. This can lead to coverage issues, excessive retransmissions, and increased call drops, especially at the cell edge.

The base station or another network node may also be involved in OLPC, where the network estimates a required transmission power based on path loss measurements and predefined parameters. Again, if the actual transmitted power over the air is lower than expected due to implementation losses, the device may not generate sufficient uplink signal strength. This can lead to coverage issues, excessive retransmissions, and increased call drops, especially at the cell edge.

Furthermore, in interference detection, a base station or other network node may wrongly attribute high interference levels to a device that is actually transmitting at a lower power due to hardware losses. This may lead to inefficient interference mitigation strategies. These inaccuracies can also affect uplink coverage optimisation, as the network may assume devices have stronger transmission capabilities than the device is actually capable of. This can result in underestimated power compensation and weaker coverage in real deployment scenarios.

Unlike conducted power, an output transmission power can take into account an actual antenna efficiency. An output transmission power refers to a power transmitted (that is, output) by the antenna. It will be appreciated that any appropriate terminology may be used for this output power, including but not limited to an output power, a transmission power, an output power parameter, an antenna output power, OTA power and so on, and such language may be used interchangeably herein.

One example of an output power parameter is a total radiated power (TRP). TRP is the total power radiated by an antenna in all directions, considering all angular radiation patterns. It can account for antenna gain, efficiency and losses, and can provide a more complete picture of how much power is actually transmitted into space. For example, if a 5G UE has a conducted transmission power of 23 dBm (power class 3), but due to antenna inefficiencies, the TRP is only 18 dBm, then it can be inferred that there is a 5 dB loss due to the antenna system. By informing the network of the TRP (or another output transmission power parameter), the network can implement more effective interference management, and network efficiency and uplink reliability can be improved.

TRP can be determined in a number of ways. It can be calculated based on an antenna pattern or effective isotropic radiated power (EIRP) for example. It may also be measured (for example, by software).

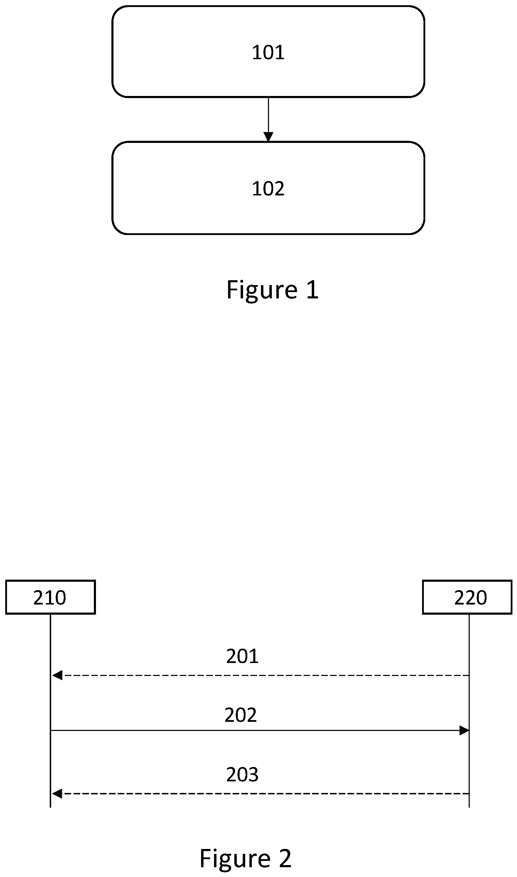

Figure 1 illustrates a flow chart of a method for operating a base station in accordance with the present disclosure. At step 101, an output transmission power parameter of the antenna and/or a transmission power parameter derived based on the output transmission power parameter is obtained at the base station.

Obtaining the output transmission parameter may comprise determining the output transmission power parameter based on a measurement. For example, a network operator, network vendor or a third party testing facility may perform tests for a device and/or an antenna (for instance, prior to putting the device on the market). A third party testing facility may provide assurance that the tests have been performed objectively, as device vendors may have concerns if a base station vendor performs the testing. In any case, where testing is performed at the network side (by a network operator, vendor or third party), an interface may be provided between the tester and the base station to provide the results to the base station. In some cases, the results may be stored by a server or database that is comprised within, or in communication with, the base station.

The tests may involve conductive and OTA testing (although in some cases, only OTA testing may occur). The OTA testing may comprise one or more of transmitting a signal at a particular frequency or set of frequencies, using a particular input power or set of input power values, transmitting a signal via different types of RF path (for instance, reflected and direct), for one of more types of device (for instance, different types of UE model), and so on. Such tests may already be performed in order to achieve certification of a minimum TRP for a frequency band or range of frequencies, so this testing can be leveraged to provide reporting to the network once the device is deployed in the network (although it currently is used only to achieve certification).

As discussed above, the results of the testing may be stored by the base station or by a server in communication with the base station and from which the base station can obtain the result. The base station or server may store a plurality of OTA power levels. For example, the base station or server may store several values per available device vendor and/or type of device and/or frequency band, and so on. This may allow the base station to better identify if power values reported by devices are accurate or, where not specified, whether the values are output or input power values.

In some cases, the value stored may be a difference between a conducted uplink power parameter and the output transmission power parameter. Again, more than one value may be stored per available device vendor and/or type of device and/or frequency band, and so on. In cases where the difference value is stored, the base station may obtain an indication of an input power parameter of the device comprising the antenna. This may be typically received from the device as part of usual base station operations (including power control and interference management). Since the base station is aware of the difference between the conducted uplink power parameter and the output transmission power parameter, the base station can convert the input power parameter into the output transmission power parameter based on the difference (typically subtracting the difference from the received input power parameter, since the input parameter will generally be greater than the OTA power parameter due to losses and other factors), or otherwise estimate or calculate the output transmission power parameter based on the input power parameter. In other examples, the input power parameter of the device may already be known or available to the base station - for example, via the testing results stored by the base station and/or database.

In other examples, the results of the testing may be stored by the device. In this case, only the results for the specific device and/or antenna could be stored. The base station can in such cases obtain the output transmission power parameter and/or a power parameter derived from the output transmission power parameter from the device. The device may send this information to the base station unprompted. In other words, obtaining this information at the base station may comprise simply receiving the information from the device. In other examples, the base station may send a request to the device for this information in order to receive the information from the device.

In cases where the base station receives the output transmission power parameter and/or derived power parameter from the device, this information may be specifically flagged as an output transmission power parameter or parameter derived from the output transmission power parameter (that is, to distinguish it from a conducted or input power that may be reported by the device). For example, the communication may label such parameters as "UL" - for example, P_UL_TRP for an uplink TRP power parameter or PH_UL for a power headroom derived from the output transmission power parameter. Other terminology may be used.

In cases where the base station receives output transmission power parameter information and/or information derived therefrom from the device, the base station may accordingly update a stored output transmission power parameter and/or a stored derived parameter. For example, the base station may store a difference of 5 dB, but may receive a communication from the device indicating a difference of 3 dB. The base station may then update the stored value to 3 dB. In other words, the received output transmission power parameter or derived transmission power parameter may be mapped into the value(s) stored by the base station or server.

In yet further examples, the base station may not store any output transmission power parameter (or a derived transmission power parameter) at all. In this case, the base station may obtain the output transmission power parameter from the device, which again, may be received unprompted or in response to the base station sending a request for the information.

Whether stored by the base station, server or device, the stored results may comprise a pre-calibrated OTA uplink power level table. If it is determined that there is a linear relationship between the test parameter (for example, the conducted power) and the output transmission power parameter, then a single value may be stored. For instance, if it is determined that the variation between OTA performance and conductive performance is 2dB, then this value can be stored. This way, for a known conductive power level, an equivalent OTA power level can be determined, estimated or calculated based on this stored value. The testing may thus comprise determining a relationship between the test parameter and the output transmission parameter. In some cases, information regarding this relationship may be stored. For instance, in cases where the relationship is non-linear, the stored results may comprise information regarding the non-linear relationship.

Other factors may also or instead be included in the testing parameters. For instance, the output transmission power parameter may be identified based on the type of antenna. For example, the OTA testing may be performed for devices having different types of antenna. Where the device stores the information, the device may store a value according to the antenna comprised within the device. Similarly, individual RF components may be tested, or tests for the same type of device but having different RF components may be performed, and the device may store a value based on the RF components comprised within it.

In other examples, the device may determine the output power parameter itself (that is, without third party OTA testing). For example, some devices may include a built-in power sensor that is configured to measure an output RF power level. The device can then send this information to the base station. This measurement or feedback can be used to adjust the output power parameter dynamically and optionally in real-time (or near-real time) - for example, using CLPC.

In other examples, the device may monitor impedance matching of the device to identify the output transmission power parameter. That is, the amount of power that has been radiated cannot be directly determined at or before the antenna terminals through electrical measurements, but losses due to an impedance mismatch may be used to estimate, determine or calculate a power loss of the antenna. The monitoring may be performed by monitoring or measuring a standing wave ratio (SWR). For example, if an SWR meter measures an incident power of 100W and 50W of reflected power, this may indicate that 50W of power have been absorbed by the antenna and/or lost due to transmission line losses. The SWR measured or monitored may more specifically be a voltage standing wave ratio.

Still referring to step 101, in some cases, the output transmission power parameter may be used (preferably by the device) to determine, calculate or estimate other power-related values that may be used by the network (for example, to more effectively use network resources). The derived transmission power parameter can then be obtained by the base station, as well as or instead of the output transmission power parameter.

For instance, one parameter that may be obtained is a power headroom (PH). A PH indicates an amount of transmission power remaining for a device (typically a UE) to use, taking into account the power currently being used for transmission. In other words, power headroom reporting is a mechanism for reporting an available transmission power of the device to the network (for example, a base station in a telecommunications, such as an eNodeB, gNodeB, NodeB, and so on). In simple terms, it may normally be considered as $PH = Maximum device transmission power - PUSCH Power = {P}_{max} - {P}_{PUSCH}$ or $PH = Maximum device transmission power - PUCCH Power = {P}_{max} - {P}_{PUCCH}$

The purpose of reporting the PH is to allow the network to effectively manage network resources and allocate appropriate power levels to devices. If the PH value is positive, it indicates to the network that the device can transmit more data if allowed. If the PH value is negative, it indicates that the device is transmitting a power greater than it is allowed to transmit. The PH value can therefore be important for implementing power control methods and effective resource allocation.

As indicated above, the PH is reported in existing infrastructure based on the conducted power. As discussed herein, this can be inaccurate and lead to inefficient network performance. However, the output transmission power parameter can be used to modify the PH equation to address these potential inaccuracies. For example, where the output transmission power parameter is an uplink TRP (P_{UL, TRP}), the PH may be considered as $PH = {P}_{UL , TRP , max} - {P}_{PUCCH / PUSCH}$ where *P_{UL,TRP,max}* is the maximum uplink TRP that the device is capable of. This may have been determined during testing.

It should be noted that the TRP PUCCH and TRP PUSCH values could replace the values of *P_{PUCCH}* and *P_{PUSCH}.* It will be appreciated also that TRP PUCCH and TRP PUSCH values could be sent to and/or obtained by the network during step 101.

Using the output transmission power parameter to determine the PH allows the amount of transmission power available to the device to be more accurately determined. Thus, the decisions of the network based on the PH can be better informed, allowing better resource allocation and power control, which in turn can provide efficient and reliable communication in the network.

It will be appreciated that other power-related parameters may be transmitted to the network based on the output transmission power parameter.

At step 102, the base station is operated according to the obtained output transmission power parameter or derived transmission power parameter. Operating the base station may comprise one or more power control methods, interference management methods, or network management methods.

For example, operating the base station may comprise, sending to the device, a communication indicating to adjust a transmission power parameter of the device. This communication may be transmitted to the device in a number of scenarios.

For example, the communication may comprise a TPC command based on the output transmission power parameter to provide closed loop power control. The device can adjust its input power based on the output transmission power parameter (which may only be known to the base station, in some examples), via the TPC command.

In another implementation, the base station may send a TPC command to implement interference management. Obtaining the output transmission power parameter can allow the base station to better distinguish true high-power devices from devices having high internal power but low OTA power, which can allow the base station to apply more accurate and appropriate interference management.

In current systems, a user exhibiting strange behaviour (particularly at a cell-edge) may be flagged as causing interference and so should be monitored. When flagged, the device of the user may be asked or instructed to reduce its transmission power due to the assumed interference. However, sometimes a large conductive power value of a device is not reflected in the OTA transmission power. In accordance with the methods and systems discussed herein, in which the OTA transmission power parameter (or related parameter) becomes known to the network, the user may not be flagged, since the output transmission power parameter or related parameter may indicate that the device is not actually transmitting at a high power level. For instance, the output power level of the device may be lower in comparison to other users in the area. The base station may thus inform the device that it is authorised to transmit at a higher power level. Other devices within a threshold region (for example, a cell or sector) may also be instructed to reduce an input transmission power parameter. Algorithms to instruct the device(s) to perform adjustments based on power levels are known.

Similarly, the base station may send a communication to the device to reduce a transmission power parameter of the device. For example, whilst the device may report a low output transmission power parameter, the output power parameter may not be sufficiently low in comparison to other users within a threshold region (for example, a cell or sector).

In yet further examples, the network can operate to compensate for actual power loss in transmissions, which can improve cell-edge connectivity, for example. This may comprise the base station instructing the device to increase (or decrease) its input power parameter for the antenna. However, more in depth methods are also possible. For example, in MIMO, massive MIMO and/or scheduling techniques, the determined distance to a user may not be accurate, due to the inaccurate power reporting based on the conducted power. By knowing the OTA transmission power parameter, different scheduling can be implemented to account for power loss and/or interference. For instance, if two users are known to be using high power levels according to the actual OTA transmission power parameter, the device transmissions may cause interference if they were assigned to the same frequency channel. Since the actual OTA transmission power parameter is known, the devices can be assigned to separate frequencies. However, if inaccurate power levels are being relied on to implement such scheduling, then it may not be identified that both the users are operating at high power levels. This can cause interference or other network inefficiencies.

Other MIMO and massive MIMO algorithms including but not limited to precoding, decoding, scheduling, improve sounding reference signal reciprocity and so on, may be implemented based on the obtained output transmission power parameter and/or the derived transmission power parameter. For example, a sounding reference signal is transmitted to a device so that the base station can understand the channel. A frequency variation may indicate whether the channel is good, sufficient, poor and so on. One factor of the signal is an amplitude for a power parameter. Without an accurate reference signal, then the base station cannot accurately determine the channel quality or perhaps even the distance to the user. Based on the reference signal reciprocity, the base station can create a beam to the device. More accurate power parameter information allows the base station to more appropriately create the beam for the device.

The method may further comprise, separately from step 101, receiving, from the device, a (further) output transmission power parameter of the antenna and operating the base station according to the further output transmission power parameter. Similarly, the method may further comprise, separately from step 101, receiving, from the device, a (further) transmission power parameter derived based on the output transmission power parameter and operating the base station according to the further derived transmission power parameter. Again, these steps of receiving may be unprompted by the base station or may be in response to a request from the base station for further information.

For example, real-world conditions may differ from the testing conditions sufficiently that the output transmission power parameter obtained in step 101 does not most accurately represent the actual output transmission power of the antenna. In other cases, the antenna (or other components of the device) may have degraded sufficiently that the previously identified output transmission power parameter is not accurate. The base station may determine that this is the case if its power control and/or interference management implementations are not operating as expected and may request updated parameters from the device. In other examples, the base station may have obtained the parameters previously from a server and may seek to confirm the obtained values (as the device may have parameter values determined by a different entity, such as the device vendor, for instance).

Figure 2 illustrates an exemplary message flow for base station operation in accordance with the present disclosure. A system comprises a device 210 comprising an antenna, and a base station 220. The device 210 may be a UE and the base station 220 may be a 3G, 4G, 5G or 6G base station, or beyond. For instance, the base station may be an NodeB, eNodeB or gNodeB. It will be appreciated that the methods discussed herein may be implemented with other devices and types of base station.

An output transmission power parameter of the antenna and/or a transmission power parameter derived based on the output transmission power parameter is obtained. As discussed above, the output transmission power parameter may be a TRP. The derived transmission power parameter may be a PH.

For simplicity, the following description with reference to Figure 2 will generally refer to the obtained output transmission power parameter, but it will be understood that the discussion below may apply equally to an obtained transmission power parameter derived based on the output transmission power parameter.

In the example illustrated in Figure 2, the obtained power parameter is received 202 at the base station 220 from the device 210. The receiving 202 may be responsive to the base station 220 sending 201 a request to the device 210 for the information. The request may optionally also include an instruction or request for the device to identify (for example, measure, determine, test, or otherwise identify) the output transmission power parameter. Such a request or instruction will be discussed in further detail below.

In some examples, the base station 220 may receive the output transmission power parameter from the device 210 and the base station 220 may derive the transmission power parameter derived based on the output transmission power parameter. In other examples, both may be received from the device 210.

Even in cases where the base station 220 stores the output transmission power parameter or can obtain it from a server (not shown), the base station 220 may still receive the output transmission power parameter from the device 210. For example, whilst the output transmission power parameter may have been identified based on OTA testing that aims to identify the output of antenna based on its implementation, separate OTA testing may have been performed by the device vendor or another party. The base station 220 can thus compare its stored value of the OTA power parameter to that received from the device 210.

The base station 220 is then operated according to the obtained power parameter(s). As shown in Figure 2, this may optionally comprise sending 203, from the base station 220 and to the device 210, a communication to the device 210.

The communication may indicate to adjust a transmission power parameter of the device 210. In some examples, the communication may specifically indicate to adjust an input transmission power parameter of the device 210. For example, the communication may advise the device 210 that it is authorised to transmit with greater power, or that it should transmit with reduced power (for instance, for interference management). In other examples, the communication may indicate that an output transmission power parameter of the device 210 should be updated.

For example, the base station 220 may receive 202 the output transmission power parameter or derived power parameter from the device although the base station 220 also stores its own output transmission power parameter or derived transmission power parameter for the device antenna. Where there is a mismatch, the base station 220 may suggest to the device 210 to update the value. The suggestion may be responsive to a determination at the base station 220 that the value stored at the device 210 is expected to be incorrect or out-of-date. For example, as discussed above with reference to Figure 1, the base station 220 may store a plurality of values. If it is determined that the plurality of values are all within a threshold tolerance but the value received from the device 210 is not, it may be assumed that the value stored by the device 210 is incorrect.

In other examples, the communication may be a request or command for the device 210 to perform testing or monitoring for the output transmission power parameter - for example, if the device 210 includes a built-in power sensor. The sensor may be configured to measure an RF power level to determine an output transmission power parameter.

In other examples, the base station 220 may request ask the device 210 to monitor impedance matching of the device 210 device to identify or confirm the output transmission power parameter. In particular, the amount of power that has been radiated cannot be directly determined at or before the antenna terminals through electrical measurements, but losses due to an impedance mismatch may be used to estimate, determine or calculate a power loss of the antenna. The monitoring may be performed by monitoring or measuring a standing wave ratio (SWR). For example, if an SWR meter measures an incident power of 100W and 50W of reflected power, this may indicate that 50W of power have been absorbed by the antenna and/or lost due to transmission line losses. The SWR measured or monitored may more specifically be a voltage standing wave ratio.

In any implementations where the device performs monitoring or testing, the device 210 may then report a measurement or a further output transmission power parameter (or further derived parameter) to the base station 220.

The communication may be a request or command for the device 210 to test or monitor the output transmission power parameter in implementations in which the base station 220 does not store the output transmission power parameter (as illustrated in Figure 2). In other examples, even where the base station 220 can obtain the output transmission power parameter and/or the derived parameter locally, the base station 220 may request or instruct the device 210 to test, monitor, measure or otherwise identify the output transmission power parameter and/or the derived transmission power parameter. The base station 220 can then compare the values and may optionally update the value(s) stored at the base station 220. For instance, the value reported by the device 210 based on testing may be considered as more up-to-date and therefore more accurate.

The methods discussed herein have been referred to as methods for operating a base station, but it will be appreciated that the methods may be considered as methods for monitoring a transmission power parameter of a device comprising an antenna configured to communicate wirelessly with a base station, a method for identifying a transmission power parameter of a device comprising an antenna, and so on. Furthermore, in embodiments where power control or interference management is implemented, it will be appreciated that the methods may be considered as methods for controlling or adjusting a transmission power parameter of the antenna or methods for interference management, and so on.

The methods described herein may be implemented with computer system configurations including hand-held devices, microprocessor systems, microprocessor- based or programmable consumer electronics, minicomputers, mainframe computers and the like. The embodiments can also be practiced in distributed computing environments, where tasks are performed by remote processing devices that are linked through a network.

Certain embodiments can also be embodied as computer-readable code on a non-transitory computer-readable medium. The computer readable medium is any data storage device than can store data, which can thereafter be read by a computer system. Examples of the computer readable medium include hard drives, network attached storage (NAS), read-only memory, random-access memory, CD-ROMs, CD-Rs, CD-RWs, magnetic tapes, and other optical and non-optical data storage devices. The computer readable medium can also be distributed over a network coupled computer systems so that the computer readable code is stored and executed in a distributed fashion. Although embodiments according to the disclosure have been described with reference to particular types of devices and applications (particularly telecommunications and network devices) and the embodiments have particular advantages in such case, as discussed herein, approaches according to the disclosure may be applied to other types of device and/or application. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

It will be appreciated that there is an implied "about" prior to power values and so on discussed in the present teachings, such that slight and insubstantial deviations are within the scope of the present teachings. Furthermore, values referred to as being "equal" may in fact differ by less than a threshold amount. The threshold amount may be 5%, for example. The threshold may also be greater than 5% (e.g., 10%, 20% or 50%) or less than 5% (for example, 2% or 1 %). Other threshold values are possible.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a communication channel, for instance) means "one or more" (for instance, one or more communication channels). It will also be appreciated that the terms "one or more" and "at least one" are interchangeable.

Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the invention. That is, an element termed a "first" element (e.g. a first device) may instead be termed a "second" element (e.g. a second device) and an element termed a "second" element (e.g. a second device) may instead be considered a "first" element (e.g. a first device). It will also be appreciated that other labelling may be used without changing the scope of the invention (for example, referring to the device by its function or use, such as, for instance, a network device or telecommunications device).

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described herein, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

In this detailed description of the various embodiments, for the purposes of explanation, numerous specific details are set forth to provide a thorough understanding of the embodiments disclosed. One skilled in the art will appreciate, however, that these various embodiments may be practiced with or without these specific details. Furthermore, one skilled in the art can readily appreciate that the specific sequences in which methods are presented and performed are illustrative and it is contemplated that the sequences can be varied and still remain within the scope of the various embodiments disclosed herein.

All literature and similar materials cited in this application, including but not limited to patents, patent applications, articles, books, treaties and internet web pages are expressly incorporated by reference in their entirety for any purpose. Unless otherwise described, all technical and scientific terms used herein have a meaning as is commonly understood by one of ordinary skill in the art to which the various embodiments described herein belongs.

## Claims

1. A method of operating a base station in a telecommunications network, the base station configured to communicate wirelessly with a device comprising an antenna, the method comprising steps of:
obtaining, at the base station, an output transmission power parameter of the antenna and/or a transmission power parameter derived based on the output transmission power parameter; and
operating the base station according to the obtained output transmission power parameter and/or the obtained derived transmission power parameter.

2. The method of claim 1, wherein obtaining the output transmission power parameter comprises determining the output transmission power parameter based on a measurement, calculating the output transmission power parameter and/or estimating the output transmission power parameter.

3. The method according to claim 1 or claim 2, wherein the output transmission power parameter and/or derived transmission power parameter is obtained based on one or more of: a type of antenna, a type of device, an expected radio frequency, RF, path of transmissions between the device and the network, an RF transmission frequency, and a conducted power parameter.

4. The method according to any previous claim, wherein the obtained derived transmission power parameter comprises a surplus transmission power parameter for the antenna.

5. The method according to any previous claim, further comprising receiving a conducted power parameter from the device.

6. The method according to any previous claim, further comprising storing, in a database, an indication of the output transmission power parameter.

7. The method according to claim 6, wherein the indication comprises a value of a difference between the obtained output transmission power parameter and a conducted power parameter.

8. The method according to claim 6 or claim 7, wherein the base station comprises or is in communication with the database.

9. The method according to any previous claim, further comprising receiving, from the device, a further output transmission power parameter of the antenna and/or a further transmission power parameter derived based on the output transmission power parameter; and
operating the base station according to the further obtained output transmission power parameter and/or further derived transmission power parameter.

10. The method according to any previous claim, wherein operating the base station comprises sending, to the device, a communication indicating to adjust a transmission power parameter of the device.

11. The method according to any previous claim, operating the base station comprises performing interference management based on the output transmission power parameter and/or derived transmission power parameter.

12. The method according to any previous claim, wherein the device is a user equipment.

13. The method according to any previous claim, wherein the output transmission power parameter comprises a total radiated power.

14. A computer program comprising instructions that, when executed by a computer, cause the computer to implement the method of any previous claim.

15. A computer-readable medium comprising the computer program according to claim 14.
